# EUROPEAN PATENT SPECIFICATION

(11) **EP 4 484 306 B1**
(45) Date of publication and mention of the grant of the patent: **06.08.2025**
(21) Application number: 23382667.6
(22) Date of filing: 29.06.2023
(51) Int. Cl.: B64U 50/31, B64C 3/18, B64C 3/26, B64U 10/25, B64U 30/10, B64U 101/31

(54) **STRUCTURE FOR A SOLAR-POWERED AIRCRAFT**
STRUKTUR FÜR EIN SOLARBETRIEBENES FLUGZEUG
STRUCTURE POUR UN AÉRONEF À ÉNERGIE SOLAIRE

(43) Date of publication of application: 01.01.2025
(73) Proprietor: Iceye Oy, 02150 Espoo (FI)
(72) Inventor: Lozano, Emilio, Jumilla, Murcia (ES); Marin Re, Juan Diego, Jumilla, Murcia (ES)
(74) Representative: Balder IP Law, S.L.

(56) References cited:
- CN-A- 106 379 516
- US-A- 5 810 284
- US-A1- 2005 258 306
- US-A1- 2019 329 861

## Description

### Field

The present disclosure relates to aircraft design and in particular to a structure for a solar-powered aircraft.

### Background

In order to remain in flight and carry out various operations, solar-powered aircraft use solar panels to generate the required power from the conversion of sunlight into electricity. Such aircraft may be partially powered by, or else may be entirely reliant on, the energy produced by the solar panels.

One problem with outfitting aircraft with solar panels is that the solar panels may interfere with the otherwise smooth exterior surface of the aircraft. This may negatively affect the aerodynamics of the aircraft.

The U.S. patent publication US 2019/329861 A1 refers to an airfoil body comprising an internal structure and a skin covering the internal structure. The skin has a pressure side and a suction side, and the suction side includes a light transmitting portion. The internal structure includes an array of solar cells configured to receive solar light through the light transmitting portion.

The Chinese patent publication CN 106 379 516 A refers to a solar-powered airplane wing and a manufacturing method thereof. The solar-powered airplane wing comprises a wing framework and a flexible solar cell module, the flexible solar cell module comprises a packaging skin and an assembly framework arranged on the lower surface of the packaging skin; the packaging skin extends outwards along the two sides of the wing framework in the spanwise direction to form a coating side; and the coating side is coated on the wing framework.

### Summary

According to a first aspect of the disclosure, there is provided a structure for a solar-powered aircraft, comprising: rigid supports; a skin tensioned over the supports, comprising: a heat-shrinking material tensioning the skin over the supports and comprising one or more holes formed therein; and one or more optically-transparent windows positioned in the one or more holes and for allowing visible light from the Sun to penetrate the skin; and one or more solar panels positioned to receive visible light from the Sun that has penetrated the skin through the one or more optically-transparent windows. The structure may be for a wing of the solar-powered aircraft.

The one or more optically-transparent windows may comprise a polymer-based material.

The polymer-based material may be Tedlar^{®}.

The heat-shrinking material may comprise Oratex^{®}.

The one or more optically-transparent windows may extend over 30% to 65% of a surface area of the skin.

At least one of the one or more solar panels may be secured to the inside of at least one of the one or more optically-transparent windows.

The one or more solar panels may be flexible.

The structure may further comprise an actuator for adjusting an orientation of at least one of the one or more solar panels.

The one or more solar panels may be rigid.

The structure may be for a vertical tail of the solar-powered aircraft.

The one or more optically-transparent windows may not be in contact with the rigid supports.

At least one of the one or more optically-transparent windows may be wrapped around a leading edge of the skin.

According to a further aspect of the disclosure, there is provided a high-altitude, unmanned aircraft comprising: a fuselage; wings connected to the fuselage and for providing lift to the aircraft; one or more electrically-powered propellers for providing thrust to the aircraft; and one or more batteries for storing electrical energy generated by the solar panels; wherein at least one of the wings comprises a structure as defined above, and wherein the one or more solar panels are for generating electricity to drive the one or more electrically-powered propellers.

The aircraft may further comprise a payload for performing Earth observation when the aircraft is in flight.

The payload may comprise a synthetic aperture radar (SAR) for performing SAR imaging of the surface of the Earth when the aircraft is in flight.

The aircraft may be configured to operate at an altitude between 50,000 and 80,000 feet.

The aircraft may further comprise a wireless communications module for allowing the aircraft to be remotely operated using communications from a satellite or a ground control station.

According to a further aspect of the disclosure, there is provided a method of manufacturing a wing for a solar-powered aircraft, comprising: joining a heat-shrinking material to one or more optically-transparent windows to form a skin, wherein the one or more optically-transparent windows are positioned in one or more holes formed in the heat-shrinking material;
attaching the skin to rigid supports shaped as an airfoil; and curing the heat-shrinking material to tension the skin over the rigid supports.

Attaching the skin to the rigid supports may comprise attaching the skin to the rigid supports such that the one or more optically-transparent windows are on an interior of the airfoil.

The method may further comprise bonding one or more solar panels to the inside of the one or more optically-transparent windows.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of an unmanned aircraft with solar panels positioned inside the aircraft's wings, according to an embodiment of the disclosure;
FIG. 2 is a top view of the unmanned aircraft of FIG. 1, according to an embodiment of the disclosure;
FIGS. 3A and 3B are respective cross-sectional and perspective views of a SAR payload according to an embodiment of the disclosure;
FIG. 4 is a plot showing aircraft altitude as a function of time, according to an embodiment of the disclosure;
FIG. 5 is a plot showing battery state as a function of time, according to an embodiment of the disclosure;
FIG. 6 is a diagram showing the unmanned aircraft of FIG. 1 performing SAR imaging, according to an embodiment of the disclosure;
FIG. 7 is a flow diagram of an example method of flying an unmanned aircraft for performing SAR imaging, according to an embodiment of the disclosure;
FIG. 8 is a first cross-sectional view of an aircraft wing, with the cross-section taken through a rib of the aircraft wing, according to an embodiment of the disclosure;
FIG. 9 is a second cross-sectional view an aircraft wing, with the cross-section taken between ribs of the aircraft wing, according to an embodiment of the disclosure;
FIG. 10 is perspective view of an aircraft wing with transparent windows and comprising a heat-shrinking material, according to an embodiment of the disclosure;
FIG. 11 is a flow diagram of a method of making a wing structure for a solar-powered aircraft, according to an embodiment of the disclosure; and
FIG. 12 is a schematic, cross-sectional diagram of an aircraft wing with an adjustable solar panel contained therein, according to an embodiment of the disclosure.

### Detailed Description

The present disclosure seeks to provide a novel structure for a solar-powered aircraft. While various embodiments of the disclosure are described below, the disclosure is not limited to these embodiments, and variations of these embodiments may well fall within the scope of the disclosure which is to be limited only by the appended claims.

Generally, embodiments of the disclosure are directed at a structure (such as the structure forming a wing) for a solar-powered aircraft. The structure includes rigid supports, such as an arrangement of ribs and spars, over which is tensioned a skin. The skin includes one or more optically-transparent windows, made for example of Tedlar^{®}, for allowing visible light from the Sun to penetrate the skin. The skin further includes a heat-shrinking material, made for example of Oratex^{®}, tensioning the skin over the rigid supports. One or more solar panels are positioned to receive visible light from the Sun that has penetrated the skin through the one or more optically-transparent windows. For example, the solar panels may be flexible panels that are adhered to or otherwise attached to interior surfaces of the optically-transparent windows ("interior surface", in this context, refers to the surface of an optically-transparent window that does not face the exterior of the aircraft but rather faces towards the interior of the aircraft (such as the interior wing structure of the aircraft)). The solar-powered aircraft can be manned or unmanned.

Embodiments of the disclosure are further directed at "High Altitude Platform Stations" (HAPS), also sometimes known as "High Altitude Pseudo Satellites", which are vehicles designed to operate at high altitude within the Earth's atmosphere rather than in space. Such vehicles can include balloons, blimps, or aircraft, and may include the novel structure (comprising the above-described rigid supports and skin) described herein.

For example, embodiments of the disclosure are further directed at HAPS aircraft having a fuselage, wings connected to the fuselage and for providing lift to the aircraft, and one or more electrically-powered propellers for providing thrust to the aircraft. At least one of the wings has rigid supports and a skin tensioned over the supports. The skin includes one or more optically-transparent windows for allowing visible light from the Sun to penetrate the skin, and a heat-shrinking material tensioning the skin over the supports. The aircraft further includes one or more solar panels for generating electricity to drive the one or more electrically-powered propellers. The one or more solar panels are positioned to receive visible light from the Sun that has penetrated the skin through the one or more optically-transparent windows. The aircraft further includes one or more batteries for storing electrical energy generated by the solar panels.

Such an aircraft may be a long-endurance aircraft. For example, the aircraft may operate at an altitude of at least 50,000 feet, and according to some embodiments may operate in an altitude range of 50,000 - 80,000 feet, or 60,000 - 80,000 feet. For instance, the aircraft may gain altitude during the day to build up potential energy and may then use that potential energy to save energy by losing altitude at night when there is no sunlight. According to some embodiments, a long-endurance aircraft is an aircraft that can operate in the atmosphere for at least 24 hours, or at least 36 hours, or at least 48 hours, or at least 72 hours, or at least one week.

According to various embodiments described herein, aircraft using the novel structure (comprising the above-described rigid supports and skin) described herein may be configured with a payload for performing Earth observation, for example imaging of a target location on the Earth's surface. In an example, the payload may comprise a Synthetic Aperture Radar (SAR) system for performing SAR imaging of the surface of the Earth while the aircraft is in flight. Advantageously, the unmanned aircraft may circle above a given target location on the Earth's surface for longs periods of time (such as days or weeks or even months), allowing the unmanned aircraft to perform continuous monitoring of the target location using the SAR payload. Alternatively, the payload may comprise an optical imaging payload, or other types of sensors used for Earth observation. The aircraft using the novel structure described herein may also be used to carry other payloads such as those used for providing communications. For instance, the aircraft outfitted with such a payload may act as a relay station or may provide cellular service in remote locations. The aircraft uses electric propulsion powered by the solar panels and batteries and may be optimized to be as lightweight and as efficient as possible, thereby allowing the flight time of the aircraft to be maximized. For example, according to one embodiment, the aircraft may weigh about 80 kg, may have a 28-meter wingspan, and may be made primarily of composite materials. According to some embodiments, the aircraft can stay aloft indefinitely, only coming down to land for maintenance or other reasons, such as battery degradation.

In order to enable the unmanned aircraft to persist in flight for long periods of time, components of the aircraft may be powered using electricity from onboard batteries. The batteries may be recharged from the solar panels that are also provided on the aircraft.

According to some embodiments described herein, solar panels can be placed inside the wings, including the main wings or the wings at the tail, as well as inside other parts of the aircraft such as the fuselage, the wing tips, or the tail of the aircraft.

According to other embodiments, in addition to solar panels being located inside at least one of the wings, additional solar panels may be positioned on the exterior surface of the wings, or on the exterior surface of some other portion of the aircraft. The solar panels may also be located on other structures of the aircraft. For example, the solar panels may be located so as to maximize vertical surface coverage to extend energy production at sunrise and sunset. For example, one or more portions of the tail of the aircraft, such as the vertical stabilizer, may be provided with solar panels as described above. Other vertical surfaces of the aircraft that may be fitted with solar panels include, for example, the fuselage (e.g., vertical portions of the fuselage) and any vertical winglets at the end of the wings.

The unmanned aircraft may additionally include a wireless communication module, allowing the aircraft to be remotely controlled by satellite communications, communications from a ground control station, or communications from a hand-held controller.

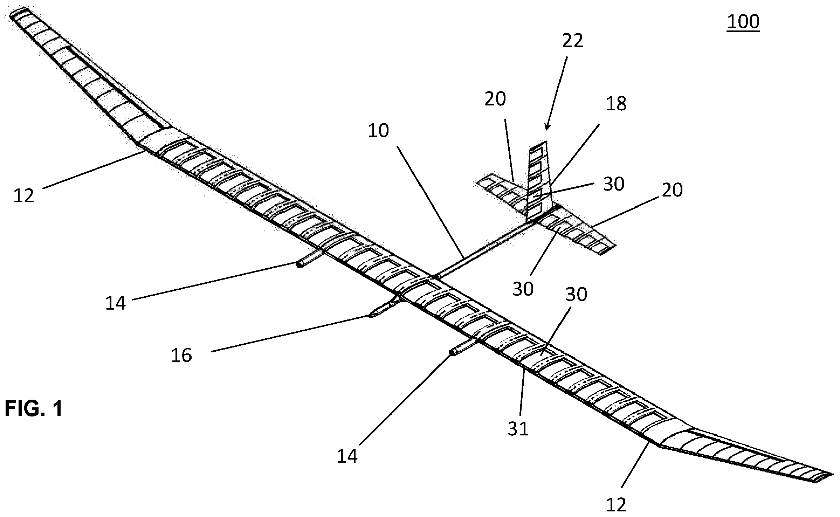

Turning now to FIG. 1, there is shown a perspective view of a high-altitude, unmanned aircraft 100 according to an embodiment of the disclosure.

Aircraft 100 includes a fuselage 10, wings 12 connected to fuselage 10, and a tail 22 connected to a rear of fuselage 10. Tail 22 includes a pair of horizontal stabilizers 20 comprising an elevator (not shown) for controlling a pitch of aircraft 100, as well as a vertical stabilizer 18 comprising a rudder (not shown) for controlling a yaw of aircraft 100.

Thrust is provided by a pair of electrically-powered propellers 14 connected to wings 12 (in the drawings, only nacelles are shown, but the skilled person will understand that propellers will be secured to the nacelles in order to provide thrust). At a front of aircraft 100 is located the nose of aircraft 100. Inside the nose is housed a payload 16 comprising, for example, instruments for performing Earth observation as aircraft 100 is in flight. According to some embodiments, SAR payload 16 may be housed in a different location on aircraft 100 or distributed across multiple locations on aircraft 100.

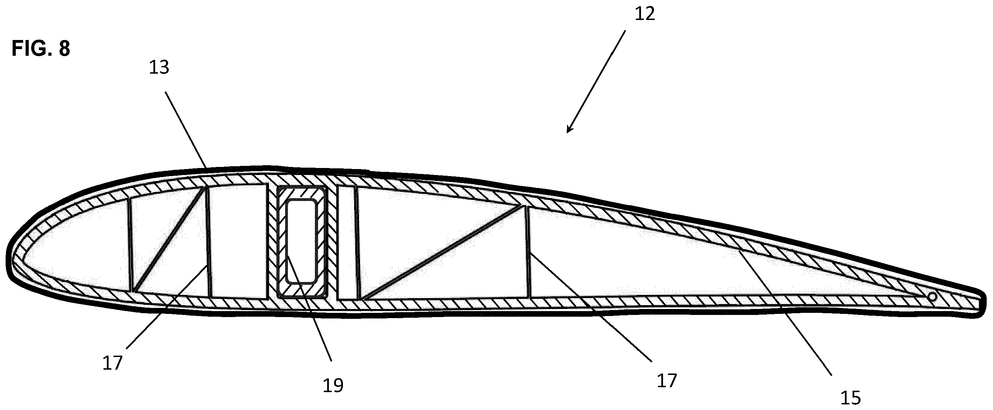

As will be described in further detail below in connection with FIGS. 8-10, optically-transparent windows 30 in the outside skin of aircraft 100 are located on wings 12, on horizontal stabilizers 20, and on vertical stabilizer 18. Underneath these optically-transparent windows 30 and located inside the skin of aircraft 100 are solar panels 31, one of which is indicated. These solar panels 31 generate electricity to power or partially power aircraft 100.

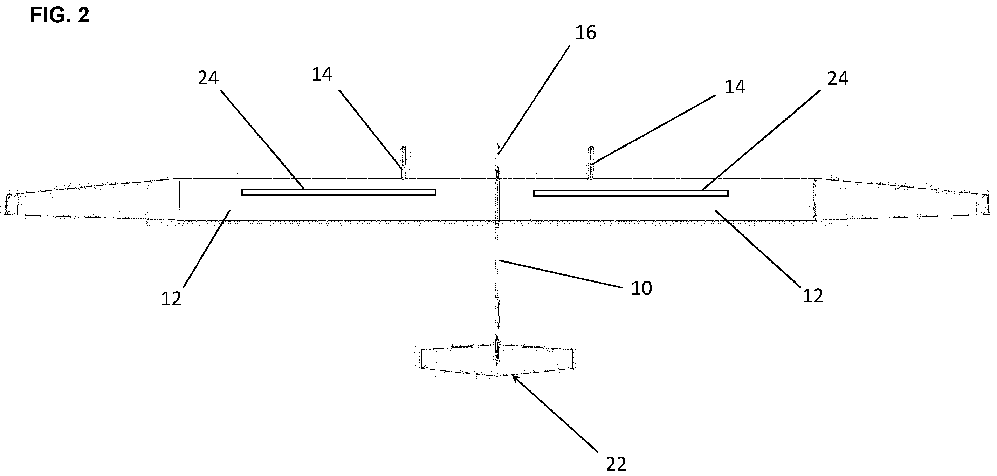

Turning to FIG. 2, there is shown a top view of aircraft 100. A pair of banks of batteries 24 (such as lithium-ion batteries) are provided within wings 12. Locating batteries 24 in wings 12 can help to reduce weight by locating the relatively heavy battery components close to lifting surfaces of aircraft 100, thereby lessening the requirements on the structure of aircraft 100. According to some embodiments, batteries 24 may be stored in another location on aircraft 100, such as in the nacelles. Batteries 24 store electrical energy generated by solar panels, as described in further detail below. Electrical energy from batteries 24 may be used to power propellers 14, SAR payload 16, and other components of aircraft 100 such as a wireless communication module (not shown) that is used to receive and transmit wireless communications sent by ground stations and/or by orbiting satellites to and from aircraft 100. Batteries containing lithium such as lithium-ion batteries are advantageous because they can store a lot of energy for a given weight. In alternative embodiments, other types of batteries with similarly high specific energy, or gravimetric energy density (Wh/kg), could also be used.

The wireless communication module may allow for remote control of aircraft 100. In some embodiments, the wireless communication module may be configured to allow a fleet of orbiting satellites to relay instructions to aircraft 100 from a control station on the ground in case aircraft 100 is not within direct communication range of a ground station. Data captured by SAR payload 16 may additionally be downloaded to the control station via the orbiting satellites. The control station may additionally centrally control multiple such unmanned aircraft. Furthermore, since line-of-sight is not required to control aircraft 100, there is effectively no limit to where aircraft 100 can fly once airborne. In addition, relaying communications via orbiting satellites may allow for more secure communications with aircraft 100, reducing the likelihood of communications link losses due to interferences or jamming.

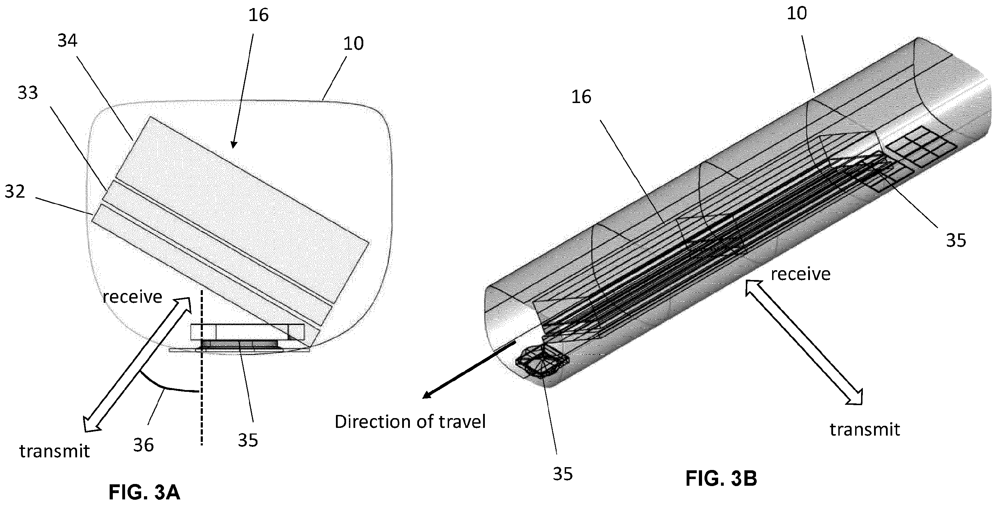

FIGS. 3A and 3B illustrate SAR payload 16 in greater detail. As can be seen in FIG. 3A, SAR payload 16 includes a phased-array transceiver antenna 32, power amplifiers 34, and RF connections 33 for transferring power from power amplifiers 34 to phased-array antenna 32. According to this embodiment, SAR payload 16 is housed within fuselage 10 (in particular, the nose of aircraft 100). A SAR radar as used for Earth observation applications is typically side-looking. In other words, it does not look straight down as might be the case with other technologies such as optical imaging. This is because the specular radar reflection from the nadir (the area directly underneath the SAR platform) would be too bright to form a good image. As such, SAR is performed by sending radar pulses to the side at a certain "look angle" which is the angle between a line pointing straight down from the radar to the Earth and the direction in which the antenna is pointing. A look angle 36 is indicated in FIG. 3A. In an example, the look angle is greater than 10°, and could be between 10° and 80°. In FIGS. 3A and 3B, adjustable payload mounts 35 are used to adjust look angle 36 of SAR radar waves emitted by phased-array antenna 32. In an example, look angle 36 can be adjusted manually, or automatically through the use of a motor or other mechanism. In an example, look angle 36 is automatically adjustable during flight through commands from the ground or from a pre-programmed mission. Payload mounts 35 may also be vibrationally isolated from fuselage 10.

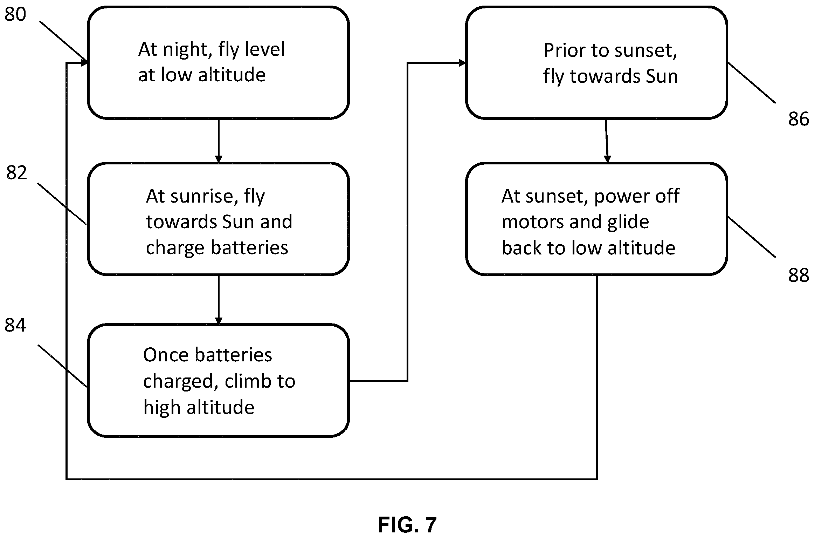

According to one example method of operating a high-altitude, unmanned aircraft, as now described and as illustrated in FIG. 7, the aircraft may remain airborne for very long periods of time, for example only needing to come down for maintenance or when the battery capacity has been degraded. In an example of such an aircraft, the solar panels are located inside the wings (as described in further detail below), and the wings comprise one or more optically-transparent windows for allowing visible light from the Sun to penetrate the aircraft's skin to reach the solar panels. In an example, the transparent windows partially wrap around and partially cover the leading edges of the wings, thus allowing the aircraft to maximize charging by flying towards the Sun when the Sun is low in the sky such as at sunrise and at sunset. According to one example embodiment, the aircraft may be towed or may fly up to high altitude, for example to altitudes of 18 km to 25 km where the aircraft will be operating. During the day, the aircraft uses solar power and charges the batteries. During the night when no sunlight is available, the aircraft relies on energy stored in the batteries and potential energy gained during the day in order to keep operating. At sunrise (block 82 in FIG. 7), the aircraft's altitude may be 18 km, and its batteries may be in a low state of charge, possibly close to being depleted. During sunrise, the aircraft may therefore fly level towards the Sun to maximize charging. When the rate of solar power generation is greater than the rate of power consumption, the batteries start charging. When the batteries are fully charged, the aircraft may begin its ascent and may climb up to an altitude of 25 km, for example, or as high as possible based on the amount of energy available (block 84 in FIG. 7). Alternatively, the aircraft can start climbing as soon as the rate of solar power generation is greater than the rate of power consumption, and then complete charging of the batteries when the target altitude has been reached.

The SAR payload may be operated at any time, as long as there is sufficient power being generated by the solar panels, or if there is sufficient energy available in the batteries to operate the SAR payload as well as to keep the aircraft flying at night until the batteries can be recharged. In an example, the power draw of the SAR payload is relatively small compared to the power required to keep the aircraft flying. When the SAR payload is not imaging, the SAR payload draws negligible power. The duty cycle of the SAR payload can be adjusted based on the amount of solar power available in order to allow the aircraft to remain aloft indefinitely. Prior to sunset (block 86 in FIG. 7), the aircraft can once again fly towards the Sun to maximize charging of the batteries via energy generation from the solar panels. At sunset (block 88 in FIG. 7), the motors are powered off or put in a state of low energy consumption and the may aircraft glide back down to 18 km. Once at 18 km (block 80 in FIG. 7), the motors are turned back on and the aircraft may fly level until sunrise, at which point the cycle repeats.

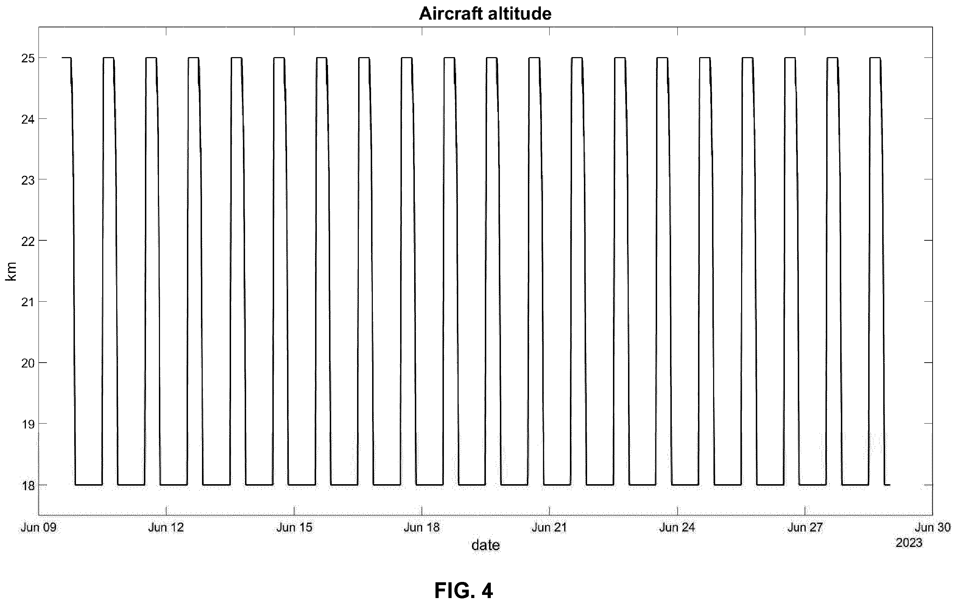

For instance, as can be seen in FIG. 4, the aircraft may ascend to higher altitudes (e.g., 25 km) during the day to gain potential energy (when the solar panels are providing sufficient energy for the plane to climb) and then use the potential energy at night after the Sun has set by descending to lower altitudes (e.g., 18 km). Generally, the aircraft should be able to fly more efficiently (and therefore use less power) at lower altitudes due to less power being required for level flight at lower altitudes. Also, the motors can be less efficient at lower power outputs, so it can be more efficient to descend relatively quickly by gliding with the motors off or at negligible power rather than gradually descending through the night or over a longer period of time with the motors operating at low power. As can be seen in FIG. 4, by using this method, the aircraft is able to sustain high-altitude flight for long periods of time, in this case for a period of almost three weeks.

According to one example embodiment, a high-altitude, unmanned aircraft with a SAR payload may carry 25 kg of batteries with a specific energy of 400 Wh/kg. The solar panel power density may be 350 W/m², with a solar panel mass-to-area ratio of 250 g/m². In this example, the solar panels are in sheet form (with an approximate area of 40 square metres), a thickness of 75 µm, and are mounted inside the wings as described in further detail below, wrapping part-way over the leading edge to maximize solar charging while flying towards the Sun. Solar panels may also be mounted on the vertical surfaces of the tail in order to maximize charging from sunlight coming from the side, for example when flying in circles. Level flight may consume approximately 1200 W. The aircraft either flies towards the Sun or in circles. The initial ascent to high altitude (18 km) can be facilitated by the aircraft being towed up to that altitude, for example. Ascent efficiency is 1/3 and the aircraft may ascend up to 25 km. Descent uses a glide ratio of 30 which, at an airspeed of 100 km/h, translates into a descent rate of 56 m/min.

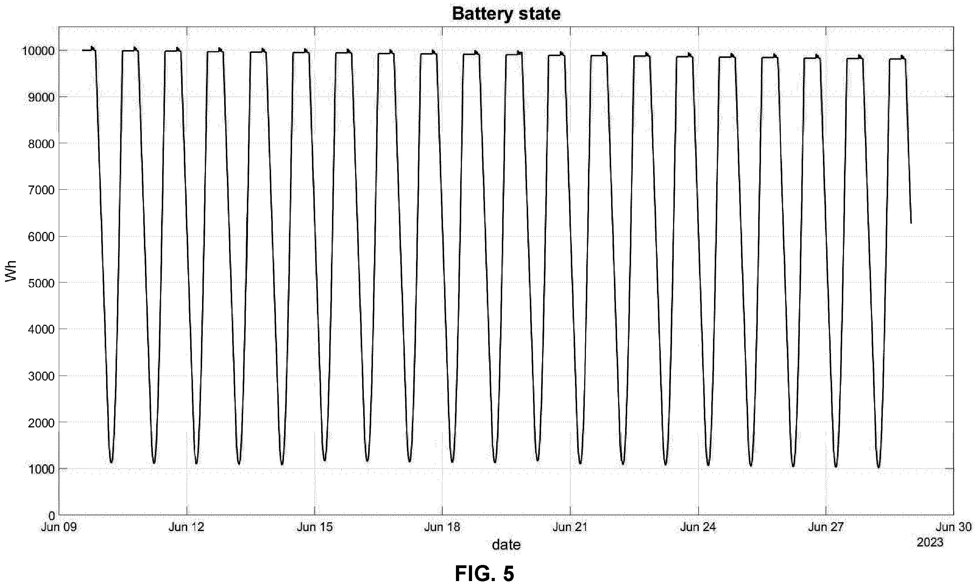

As can be seen in FIG. 5, the batteries may be periodically discharged and charged as the aircraft respectively descends to and flies at low altitude at night, and then ascends to and flies at high altitudes during the day. The state of the battery fluctuates between full (approximately 10,000 Wh) and depleted with approximately 1,000 Wh remaining. In this example, the solar panels are sufficient to fully recharge the batteries each day, with sufficient extra power available for operating the SAR payload and other functions. This is shown by the batteries reaching and staying at a fully charged state for a period of time each day while the aircraft is in level flight. The batteries are also sized to provide sufficient battery capacity to keep the aircraft flying at night when solar power is not available, with a buffer of approximately 1000 Wh that can be used for operating the SAR payload, for example.

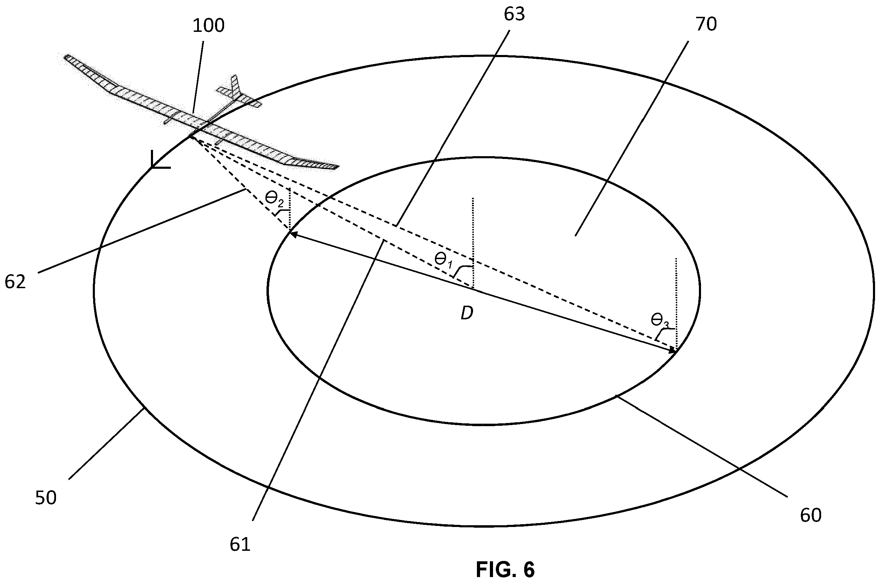

Turning to FIG. 6, there is shown an example of unmanned aircraft 100 circling, via a flight path 50, a target location 70 on the Earth's surface. When operating SAR payload 16 to perform imaging of target location 70, radar waves emitted by the SAR radar of SAR payload 16 define a spotlight 60 that encompasses target location 70 as aircraft 100 circles overhead. According to some embodiments, the width of spotlight 60 may range from 5-30 km. In FIG. 6, the spotlight area is shown as circular, but it is understood that other flight patterns (such as flying in squares) to monitor a target location are also possible. As can be seen in FIG. 6, the radar beam is emanating out from the antenna of SAR payload 16 in the front of aircraft 100 in a direction approximately perpendicular to the direction of motion of aircraft 100 and looking to the side at a certain look angle. In some examples, the phased array radar may also comprise some electronic steering that allows the radar beam to be steered slightly forwards and backwards, for example by +/- 2°, or by +/- 10° from directly perpendicular.

Incidence angle is the angle between a center line 61 of the radar beam from the SAR antenna to the target location, and a line normal to the Earth's surface at the target location. The incidence angle is shown by *Θ₁* in FIG. 6. Incidence angle is often used interchangeably with look angle, but they are not always the same. If the ground is flat and the curvature of the Earth is neglected, then look angle and incidence angle can be roughly the same. However, if the terrain is not flat, the incidence angle and the look angle can differ. The Earth's curvature can also cause the incidence angle to be different from the look angle, particularly at high look angles, due to the greater distance along the ground from the SAR payload to the target location.

According to some embodiments, and assuming that the incidence angle is roughly the same as the look angle in this example, the look angle and the incidence angle *θ₁* may be greater than 10° but less than 80° for SAR imaging of marine targets and less than 60° for SAR imaging of land targets. The radar beam has a near edge 62 with an incidence angle of *θ₂* and a far edge 63 with an incidence angle of *θ₃*. It can be seen from FIG. 6 that *θ₂* will be less than *θ₁, and θ₃* will be greater than *θ₁*. In an example, if *θ₁* is 60°, then *θ₂* may be approximately 55° and *θ₃* may be approximately 65°. Other beam widths with different incidence angles are also possible, depending on the configuration of the radar.

According to some embodiments, SAR payload 16 may be configured to perform SAR imaging using X-band frequencies (e.g., 8 - 12 GHz). This is a band that can also be used for SAR imaging on satellites. In other embodiments, SAR payload 16 may be configured to perform SAR imaging using the C-band (e.g. 4 - 8 GHz) or the L-band (e.g. 1 - 2 GHz). C-band in particular is a band that have traditionally been used on SAR earth observation satellites. C and L bands may be useful where lower quality images are acceptable or to mitigate the generally lower efficiency of the electronics in some other bands. When the SAR radar is operating in the Earth's atmosphere, higher frequency bands may also need improved turbulence compensation.

According to some embodiments, the SAR radar is configured to emit radar waves in the Kₐ band, for example waves in the 26.5 - 40 GHz range, or waves in the 33.4 - 36 GHz range (depending on regulations). Generally, the Kₐ band is not used for SAR imaging from space because, among other issues, it can be more affected by atmospheric interference. However, operating SAR payload 16 in the Kₐ band on a high-altitude unmanned aircraft may be beneficial for a number of reasons.

For example, the Kₐ band occupies a range that has a relatively high frequency, and therefore the distance that aircraft 100 needs to travel to form an image of a certain resolution is less than if the SAR radar were operating in a lower frequency band. This is because, relative to the ground, the SAR antenna has to travel a certain distance in order to form the synthetic aperture that is the basis of synthetic aperture radar. Using the Kₐ band can therefore provide a significant savings in time to form the image, because aircraft 100 may typically only travel at an airspeed of about 100 km/h. In contrast, satellites operating in low-earth orbit travel can travel at a speed of approximately 7.8 km/s, so the time required to form an image on a satellite-based SAR platform is much less of a concern than on a HAPS platform.

In addition, the use of the Kₐ band may allow the size of SAR payload 16 to be relatively small. For example, according to some embodiments, the size of the SAR radar may be only 10 cm x 10 cm, and could potentially be even smaller. This is compared to some space-based SAR radars that have antennas that are a meter by several meters, for example. According to some embodiments, in a 10 cm x 10 cm Kₐ band phased-array antenna, the antenna may contain 12 x 12 antenna patches, or 16 x 16 antenna patches. The resolution that can ultimately be achieved by SAR imaging based on the Kₐ band can be less than 10 cm, which is very small. According to some embodiments, the SAR radar may be configured to image over a 2 GHz bandwidth with a pulse repetition frequency (PRF) > 2 GHz. The PRF refers to the number of times (per second) the transmit radar signal is switched on and off. The phased-array antenna may be steered electronically, for example by an angle of +/-10 degrees. In addition, a device may be used to adjust the look angle of the SAR radar inside fuselage 10, to allow for pointing the SAR radar or for greater variation in the extent of spotlight 60.

The power amplifiers for Kₐ band radars can be less efficient than for other power amplifiers operating in other frequency bands, so the power output requirement for Kₐ band radars can be higher than for radars operating at lower frequencies. However, this can be at least partially compensated for because the distance that SAR payload 16 has to travel to form the synthetic aperture is less than for lower frequencies. This may result in shorter illumination times, thereby allowing the Kₐ band radar to be activated for relatively shorter periods of time (e.g., lower duty cycle) in order to capture the desired image or images. While the difference in illumination time may not be significant for fast-moving, space-based SAR platforms, the difference in illumination time for relatively slow-moving HAPS platforms can be significant, for example ranging from tens of seconds to a minute or more.

According to the embodiment of FIG. 1, the transmitter and the receiver of SAR payload 16 are in the nose of aircraft 100. Additional receivers may be placed at tail 22 and/or along wings 12. While the transmitter and receiver of the SAR radar may be in the same unit, they may alternatively be separated into two units. Separating the transmitter and receiver into two units has the advantage of simplicity of design while also keeping the transmitter, where most of the heat is generated, away from the receiver which should preferably remain cool. For example, the transmitter may be mounted in fuselage 10 while the receiver could be mounted in fuselage 10 or some other location on aircraft 100 such as the tips of wings 12 or on tail 22. Such separation of transmitter and receiver may assist with thermal management and may also have benefits for object location and detection, for example for detecting moving objects on the Earth's surface, or for the assessment of elevations on the Earth's surface.

According to one embodiment, a high-altitude, unmanned HAPS aircraft has a 0.1 m x 0.05 m Kₐ-band phased-array antenna comprising a single row of eight antenna patches in a panel. The panel has 32 power amplifiers feeding the antenna patches, with each power amplifier outputting 4 W. For each power amplifier, there is also a 0.2 W connector loss and a 1.2 W antenna loss, for a net of 2.6 W radiating from each antenna patch. For the entire panel, the radiated power is 84.6 W, and the power delivered to the phased-array antenna is 122.2 W, representing peak power that is delivered and radiated. Depending on the duty cycle at which the phased-array antenna is operated, the average power radiated and average power delivered to the antenna could also be significantly lower.

According to one embodiment of using a high-altitude, unmanned HAPS aircraft to perform SAR imaging, the aircraft has an airspeed of 0.028 km/s, or about 100 km/h, and is flying at an altitude of 20 km. Images can be obtained with an incidence angle *Θ₁* of 30° (roughly equivalent to a look angle of 30°), which translates to a slant range distance from the aircraft to the target of about 23 km. The distance on the ground from the nadir (the point directly underneath the aircraft) to the target is roughly 11.5 km, and the swath width is approximately 2 km wide.

According to one embodiment, the Kₐ-band radar images with a center frequency of 35 GHz. The pulse repetition frequency (PRF) is set to 140 Hz with a duty cycle of 0.3. According to this duty cycle, the average radiated power and average delivered power are about 25 W and 37 W respectively. Since this a small fraction of the roughly 1200 W required to keep an aircraft according to this example in level flight, such power requirements can be supported with the batteries and solar panel systems of the high-altitude unmanned aircraft that has been appropriately designed with this load taken into account. System bandwidth is 1200 MHz, and a total illumination time of about 18 seconds is required to deliver an azimuth resolution of approximately 0.20 m and a range (cross-track) resolution of 0.25 m. This resolution translates to a cell of approximately 0.05 square meters on the ground.

According to another embodiment (showing that even finer resolutions can be achieved), imaging is performed from an altitude of 19 km with an incidence angle *Θ₁* of about 60°, a slant range resolution of 0.075 m, an azimuth resolution of 0.050 m, and a ground range resolution of 0.086 m. This level of resolution can be particularly useful in applications where persistent monitoring of a city, or a town, is desired. Imaging in urban environments can be very difficult to exploit if the resolution of the imaging is greater than 0.5 m. Thus, a much finer resolution of less than 0.1 m x 0.1 m can be very useful for monitoring such closely-packed and dense environments, and can be readily achieved using the Kₐ-band SAR payload with a center frequency of 35 GHz and a bandwidth of 2 GHz.

There is also another advantage to using an incidence angle *Θ₁* of 60° (+/- 10°) for this application. SAR systems operating from satellites typically do not use incidence angles as high as 60° because they are much further from the targets on the ground and this greater distance can result in poor range and azimuth ambiguities, which can significantly diminish image quality. However, using low incidence angles can cause extreme layover (a well-known artifact in SAR images) that irretrievably combines ground and building returns, making exploitation challenging. Using a Kₐ band radar on a high-altitude unmanned aircraft with a larger incidence angle *Θ₁* (e.g., 60°) can solve this problem because the aircraft, even at high altitudes in the atmosphere, is still much closer to the ground than satellites, which in low Earth orbits are still over four hundred kilometers above the Earth's surface. As such, azimuth and range ambiguities can be much less, leading to better image quality. Using a higher (e.g., 60°) incidence angle also reduces the layover effects, albeit at the cost of increasing shadowing (where closer objects block the radar signals from reaching objects behind them). However, unlike layover effects, shadow effects can be more easily compensated for by imaging around the target city, for example as shown in FIG. 6. Larger incidence angles can also help to increase ground resolution. In this example, the nominal spotlight diameter for focusing on an area using a high-altitude unmanned aircraft as a SAR platform at 10 cm or lower resolution is approximately 5 km, as indicated by the distance *D* in FIG. 6.

Turning now to FIGS. 8-12, there are described various wing structures for a solar-powered aircraft, as well as methods of making such wing structures.

FIG. 8 shows a schematic cross-sectional view of one of aircraft wings 12, taken through a rigid support 15 (also referred to as a rib when inside a wing). In an example, wing 12 includes a structural arrangement comprising, for example, ribs 15 and spars 19. As shown in FIG. 8, spar 19 runs longitudinally through wing 12 and is the main structural element of wing 12. Rigid supports 15 are generally configured and positioned along spar 19 to define the overall aerodynamic shape of wing 12. In an example, rigid support 15 comprises structural members 17 and attaches to spar 19. A skin 13 is provided over rigid support 15, as shown in FIG. 8, and the application of skin 13 to rigid support 15 is described in further detail below. In order to tension skin 13 over rigid support 15, skin 13 comprises a heat-shrinking material. According to some embodiments, Oratex^{®} is used as the heat-shrinking material, although other materials may be used in combination with, or instead of, Oratex^{®}. Once skin 13 is applied to or otherwise provided over rigid support 15, heat is applied to skin 13 and causes the heat-shrinking material therein to shrink and tension over rigid support 15, thereby resulting in the external surface of wing 12 having a relatively smooth, tensioned aerodynamic shape. Once heat is applied to cause skin 13 to shrink, skin 13 will be in close contact with rigid support 15. Skin 13 does not need to be bonded to rigid support 15 all the way around rigid support 15, for example with adhesive, although there may be a small number of bonding points in order to hold skin 13 in place while it is being applied to rigid support 15.

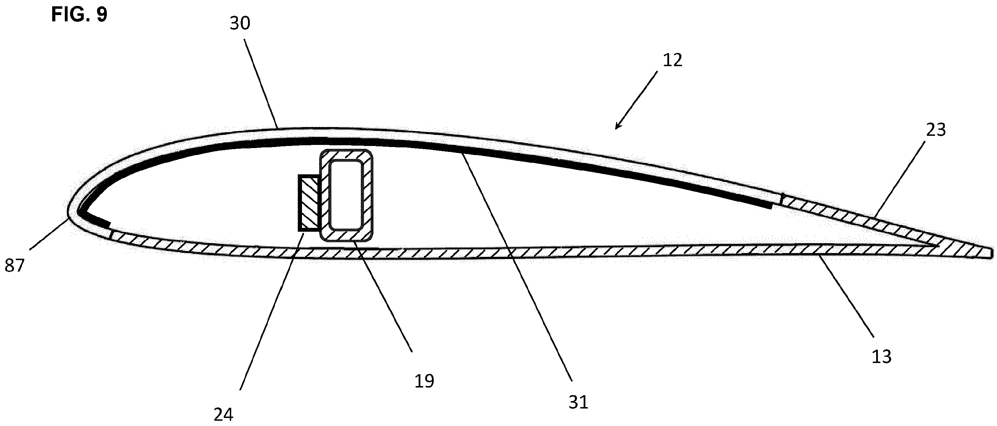

FIG. 9 shows a schematic cross-sectional view of one of aircraft wings 12, but this time taken in-between two adjacent ribs. In an example, and as can be seen in FIG. 9, the transparent windows 30 and solar panels 31 are positioned in-between the ribs. Here, the cross-section of wing 12 only shows skin 13, in this view comprising a heat-shrinking section 23 and a transparent window 30. In an example, transparent window 30 wraps around the leading edge 87 of wing 12. Flexible solar panels 31 are attached to the bottom of transparent window 30 inside wing 12. Solar panel 31 does not necessarily have to contact spar 19 because solar panel 31 is held off spar 19 by the ribs on either side (as shown in FIG. 9). Although in this example transparent window 30 and solar panel 31 are positioned in between the ribs, they could also be positioned over some of the ribs, with the bottom of solar panel 31 contacting the ribs. Transparent window 30 and solar panel 31 also do not need to wrap around leading edge 87. Transparent window 30 could be solely on the top of wing 12, for example. Furthermore, although the current example is shown with respect to the main wing of a solar-powered aircraft, it will be understood that the combination of the transparent material and heat-shrinking material can be applied to other structures as well, including the rear wings, the wing tips, the fuselage, and vertical sections such as the tail of the aircraft.

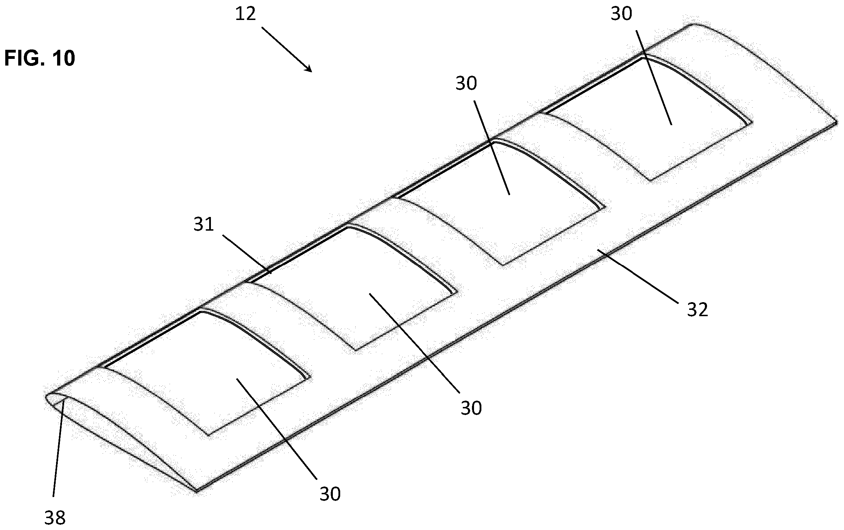

As described above, solar panels 31 are provided in the interior of wings 12 so as not to interfere with the aerodynamic shape of wings 12. In order that sunlight be able to reach the solar panels 31, and prior to applying skin 13 over rigid supports 15, a number of optically-transparent windows 30 are provided in skin 13, as can be seen in FIG. 10. In particular, portions of the exterior surface of wing 12 comprise a transparent material (according to some embodiments, Tedlar^{®}, or some other polymer-based material) that allows sunlight to penetrate the outer surface of wing 12 and reach the solar panels 31 inside wing 12.

Tedlar^{®} is transparent but does not shrink when heat is applied to it, whereas Oratex^{®} shrinks when heat is applied to it but is not transparent. Both materials are coupled together so that skin 13 may exhibit both desired properties. To manufacture this combined material, the Oratex^{®} sheet is cut to shape, and holes are cut in the Oratex^{®} where the transparent windows 30 are to be positioned before skin 13 is installed over rigid supports 15. Once the Oratex^{®} is cut, patches or windows 30 of Tedlar^{®}, larger than the holes, are positioned and bonded to the Oratex^{®} using an epoxy-based adhesive. Other means of bonding the window to the Oratex^{®} are also possible, such as high-performance tape adhesives. In an example, the Tedlar^{®} windows 30 can be bonded to the Oratex^{®} from below. Since both the Tedlar^{®} and the Oratex^{®} are both quite thin, and as such there is not much of a step between the two where they join, the junction can be made even smoother by using the bonding epoxy to blend the step in order to make it more smooth.

According to some embodiments, the optically-transparent windows may extend over 20% to 75% of a surface area of the skin, or more particularly 30% to 65% of the surface area. It may be preferable to cover as much of the surface of wing as possible with optically-transparent material, while still providing sufficient heat-shrinking material to enable adequate tensioning of the skin over supports 15.

Either before the Oratex^{®} is adhered to the Tedlar^{®}, or afterwards, film-based or otherwise flexible solar panels 31 are attached to the interior side of the Tedlar^{®} windows 30. This can be done using adhesive to bond solar panels 31 to the Tedlar^{®}, or for example by using adhesive tape such as optically-transparent double-sided tape. The solar panels 31 can therefore conform to the shape of windows 30. In other examples, the flexible solar panels 31 are attached to the optically-transparent windows 30 along the edges (e.g., using tape), and it is not necessary that the solar panels 31 conform perfectly to the shape of windows 30 in the middle of windows 30. The completed hybrid skin 13 is then placed over to rigid supports 15. This can be achieved by using adhesive or tape in just a few locations, such as at the leading edge 87 of wing 12, for example. Once skin 13 is in place relative to rigid supports 15, heat is applied. As described above, the heat-shrinking capacity of Oratex^{®} allows skin 13 to provide wing 12 with the desired aerodynamic profile as defined by supports 15. In addition, the membrane tension generated by the Oratex^{®} when it shrinks allows for relatively smooth Tedlar^{®} windows 30 that would otherwise not be possible, by causing Tedlar^{®} windows 30 to be stretched. The tension generated by the Oratex^{®} holds the hybrid skin 13 in place without the need for further adhesive, and simplifies the manufacturing process. For example, if only optically-transparent material such as Tedlar^{®} were used for wing 12, the Tedlar^{®} would have to be stretched over rigid supports 15 and glued while under tension, which could be quite a laborious process. The adhesion between skin 13 and rigid supports 15 may also not be as strong because it relies on the adhesion between skin 13 and rigid supports 15 to maintain the tension in skin 13.

In the current example, since the flexible solar panels 31 are secured directly to the inside of the Tedlar^{®} windows 30 (i.e., the side of windows 30 on the inside of the wing structure), light passing through windows 30 will reach the solar panels. If needed, for example to maximize energy production when the Sun is at low altitudes, windows 30 can be wrapped around leading edge 87 of wing 12, as shown in FIG. 9. In FIG. 10, the transparent windows 30 can be wrapped around to the point indicated by line 38.

Positioning the solar panels inside the wing structure instead of on the surface of wing 12 provides a number of potential advantages. For example, the exterior surface of wing 12 can be made smoother and more continuous. This allows the solar panels to be independent from the flight surface of wing 12.

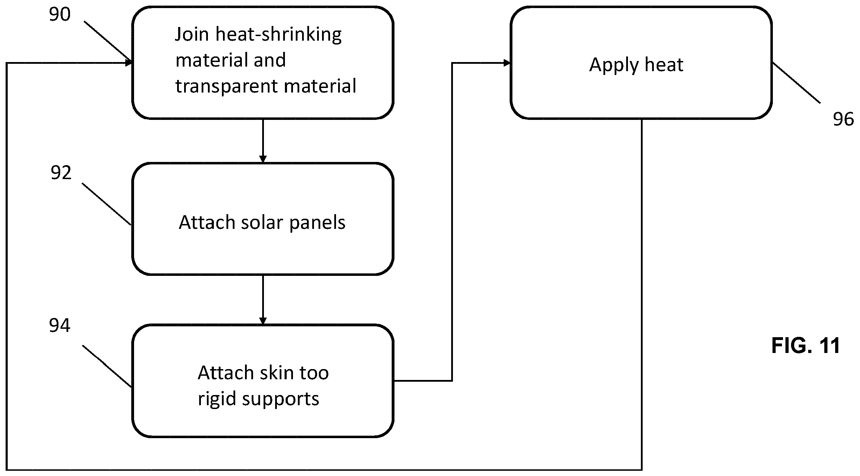

Turning to FIG. 11, there is described a general method of making a wing structure for a solar-powered aircraft.

At block 90, a heat-shrinking material (such as Oratex^{®}) is joined to a number of optically-transparent windows. For example, as described above, rectangular holes may be cut in the heat-shrinking material, and windows of the optically-transparent material may be attached over the holes.

At block 92, solar panels are attached to the optically-transparent windows. For example, as described above, film-based or flexible solar panels may be attached to the inside surfaces of the windows. According to some embodiments, the solar panels may be attached to the windows before the windows are joined to the heat-shrinking material.

At block 94, the resulting hybrid skin of heat-shrinking material and optically-transparent windows is attached to an arrangement of rigid supports that define the aerodynamic shape of the wing.

At block 96, heat is applied to the skin, to tension the heat-shrinking material and the optically-transparent windows. For example, according to some embodiments, a curing cycle of 30-40 minutes and a temperature of 60-80 degrees Celsius may be used.

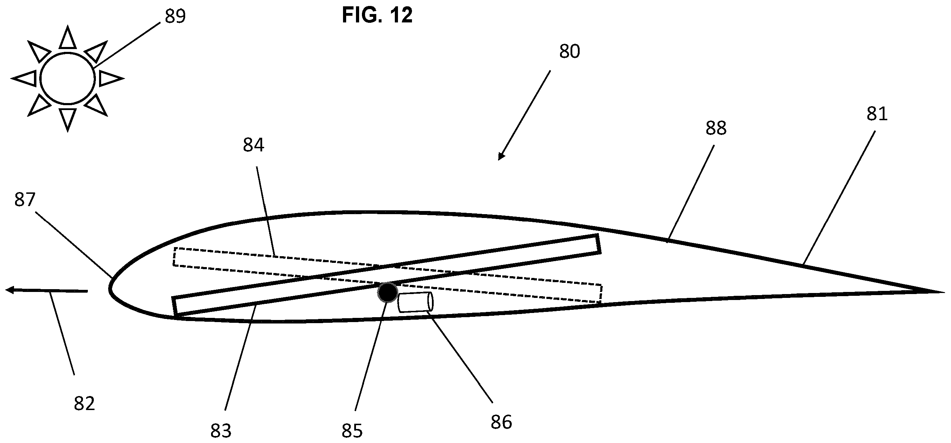

FIG. 12 shows an alternative embodiment of how the solar panels can be positioned inside the wing structure. In this embodiment, instead of flexible solar panels that are attached directly to the optically-transparent windows, tillable and rigid solar panels are used. As shown in FIG. 12, a wing structure assembly 80 is shown in cross-section. A solar panel 83 is positioned within a wing 81. Because solar panel 83 is positioned inside wing 81 and does not form part of the aerodynamic surface of wing 81, solar panel 83 can be a rigid, high-efficiency solar panel that has the advantage of being more readily available, less expensive, and easier to integrate into wing 81. Part of the top of wing 81 above solar panel 83 is transparent, for example between a leading edge 87 and at a point 88 towards a rear of wing 81, to allow light from Sun 89 to reach solar panel 83. The transparent area could potentially wrap around leading edge 87 of wing 81.

Solar panel 83 can be fixed inside wing 81 or can be tiltable. In FIG. 12, solar panel 83 is tiltable and is shown pointing towards the direction of travel of the aircraft, as indicated by directional arrow 82. This facilitates the extraction of more light (and hence more energy) when flying in the direction of Sun 89. A strategy of flying towards the Sun can be employed to maximize power generation from solar panel 83, particularly in the late evening or early morning. The additional energy thus extracted can be important for allowing the aircraft to remain aloft for a longer period of time. In an example, solar panel 83 is tiltable, under control of an actuator 86, around a pivot 85. An alternative position 84 for solar panel 83 is shown with solar panel 83 tilted back. Alternative position 84 could help with extracting more light while flying away from the Sun, for example. Solar panel 83 could also be positioned anywhere in-between these two positions, for example pointing straight up in order to maximize exposure to sunlight in the middle of the day. The transparent area of wing 81 between 87 and 88 may be sized to allow light from the Sun to reach solar panel 83 in all possible positions of solar panel 83. Light sensors (not shown) can be used, for example, to automatically point solar panel 83 in the direction of the greatest light.

While FIGS. 8-12 describe various wing structures for a solar-powered aircraft, it shall be recognized that the described structures may be used for other parts of the aircraft, such as the tail, and not just the wings.

According to some embodiments, in order to power the various components of aircraft 100, fuel cells may be used in addition to solar panels.

According to some embodiments, the unmanned aircraft may be provided without a tail. For example, pitch and yaw of the aircraft may be provided using elevators and a rudder provided on other portions of the aircraft.

While the drawings have been presented in the context of an unmanned aircraft with wings extending out of the fuselage, the disclosure extends to other wing designs, such as blended-wing designs in which the wings may be more integrally formed with the fuselage.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

## Claims

1. A structure for a solar-powered aircraft (100), comprising:
rigid supports (15);
a skin (13) tensioned over the supports, comprising:
a heat-shrinking material tensioning the skin over the supports and comprising one or more holes formed therein; and
one or more optically-transparent windows (30) positioned in the one or more holes and for allowing visible light from the Sun to penetrate the skin; and
one or more solar panels (31) positioned to receive visible light from the Sun that has penetrated the skin through the one or more optically-transparent windows.

2. The structure of claim 1, wherein the structure is for a wing (12) of the solar-powered aircraft.

3. The structure of claim 1 or 2, wherein the one or more optically-transparent windows comprise a polymer-based material.

4. The structure of any preceding claim, wherein the one or more optically-transparent windows extend over 30% to 65% of a surface area of the skin.

5. The structure of any preceding claim, wherein at least one of the one or more solar panels is secured to the inside of at least one of the one or more optically-transparent windows.

6. The structure of any preceding claim, wherein the one or more solar panels are flexible.

7. The structure of any preceding claim, further comprising an actuator (86) for adjusting an orientation of at least one of the one or more solar panels.

8. The structure of claim 7, wherein the one or more solar panels are rigid.

9. An unmanned aircraft (100) comprising:
a fuselage (10);
wings (12) connected to the fuselage and for providing lift to the aircraft;
one or more electrically-powered propellers (14) for providing thrust to the aircraft; and
one or more batteries (24) for storing electrical energy generated by one or more solar panels (31),
wherein at least one of the wings comprises a structure according to any one of claims 1-8, and
wherein the one or more solar panels (31) are for generating electricity to drive the one or more electrically-powered propellers.

10. The aircraft of claim 9, further comprising a payload (16) for performing Earth observation when the aircraft is in flight.

11. The aircraft of claim 10, wherein the payload comprises a synthetic aperture radar (SAR) for performing SAR imaging of the surface of the Earth when the aircraft is in flight.

12. The aircraft of any one of claims 9-11, wherein the aircraft is configured to operate at an altitude between 50,000 and 80,000 feet.

13. A method of manufacturing a wing (12) for a solar-powered aircraft (100), comprising:
joining a heat-shrinking material to one or more optically-transparent windows (30) to form a skin (13), wherein the one or more optically-transparent windows are positioned in one or more holes formed in the heat-shrinking material;
attaching the skin to rigid supports (15) shaped as an airfoil; and
curing the heat-shrinking material to tension the skin over the rigid supports.

## Patentansprüche

1. Struktur für ein solarbetriebenes Luftfahrzeug (100), umfassend:
starre Stützen (15);
eine über die Stützen gespannte Haut (13), umfassend:
ein wärmeschrumpfendes Material, das die Haut über die Stützen spannt und ein oder mehrere darin ausgebildete Löcher aufweist; und
ein oder mehrere optisch transparente Fenster (30), die in dem einen oder den mehreren Löchern angeordnet sind und sichtbares Licht von der Sonne durch die Haut eindringen lassen; und
ein oder mehrere Solarpaneele (31), die positioniert sind, um sichtbares Licht von der Sonne zu empfangen, das durch das eine oder die mehreren optisch transparenten Fenster durch die Haut eingedrungen ist.

2. Struktur nach Anspruch 1, wobei die Struktur für einen Flügel (12) des solarbetriebenen Luftfahrzeugs bestimmt ist.

3. Struktur nach Anspruch 1 oder 2, wobei das eine oder die mehreren optisch transparenten Fenster ein Material auf Polymerbasis umfassen.

4. Struktur nach einem der vorhergehenden Ansprüche, wobei sich das eine oder die mehreren optisch transparenten Fenster über 30% bis 65% einer Oberfläche der Haut erstrecken.

5. Struktur nach einem der vorhergehenden Ansprüche, wobei mindestens eines der einen oder mehreren Solarpaneele an der Innenseite von mindestens einem der einen oder mehreren optisch transparenten Fenster befestigt ist.

6. Struktur nach einem der vorhergehenden Ansprüche, wobei das eine oder die mehreren Solarpaneele flexibel sind.

7. Struktur nach einem der vorhergehenden Ansprüche, ferner umfassend einen Aktuator (86) zum Einstellen einer Ausrichtung von mindestens einem der Solarpaneele.

8. Struktur nach Anspruch 7, wobei das eine oder die mehreren Solarpaneele starr sind.

9. Unbemanntes Luftfahrzeug (100), umfassend:
einen Rumpf (10);
Flügel (12), die mit dem Rumpf verbunden sind und für Auftrieb des Luftfahrzeugs sorgen;
einen oder mehrere elektrisch angetriebene Propeller (14) zum Erzeugen von Schub für das Luftfahrzeug; und
eine oder mehrere Batterien (24) zum Speichern von von einem oder mehreren Solarpaneelen (31) erzeugter elektrischer Energie,
wobei mindestens einer der Flügel eine Struktur nach einem der Ansprüche 1-8 aufweist, und
wobei das eine oder die mehreren Solarpaneele (31) zum Erzeugen von Elektrizität zum Antrieb des einen oder der mehreren elektrisch angetriebenen Propeller dienen.

10. Luftfahrzeug nach Anspruch 9, ferner umfassend eine Nutzlast (16) zum Durchführen von Erdbeobachtung, wenn das Luftfahrzeug sich im Flug befindet.

11. Luftfahrzeug nach Anspruch 10, wobei die Nutzlast ein Radar mit synthetischer Apertur (SAR) umfasst, um eine SAR-Abbildung der Erdoberfläche zu erstellen, wenn sich das Luftfahrzeug im Flug befindet.

12. Luftfahrzeug nach einem der Ansprüche 9 bis 11, wobei das Luftfahrzeug eingerichtet ist, in einer Höhe zwischen 50.000 und 80.000 Fuß betrieben zu werden.

13. Verfahren zum Herstellen eines Flügels (12) für ein solarbetriebenes Luftfahrzeug (100), umfassend:
Verbinden eines wärmeschrumpfenden Materials mit einem oder mehreren optisch transparenten Fenstern (30), um eine Haut (13) zu bilden, wobei das eine oder die mehreren optisch transparenten Fenster in einem oder mehreren in dem wärmeschrumpfenden Material ausgebildeten Löchern angeordnet sind;
Befestigen der Haut an starren Stützen (15) in Form eines Tragflügels; und
Aushärten des wärmeschrumpfenden Materials, um die Haut über die starren Stützen zu spannen.

## Revendications

1. Structure pour un aéronef à énergie solaire (100), comprenant :
des supports rigides (15) ;
une peau (13) tendue au-dessus des supports, comprenant :
un matériau thermorétractable tendant la peau au-dessus des supports et comprenant un ou plusieurs trous formés dans celui-ci ; et
une ou plusieurs fenêtres optiquement transparentes (30) positionnées dans le ou les trous et pour permettre à la lumière visible du soleil de pénétrer la peau ; et
un ou plusieurs panneaux solaires (31) positionnés de façon à recevoir la lumière visible provenant du soleil qui a pénétré la peau à travers la ou les fenêtres optiquement transparentes.

2. Structure selon la revendication 1, laquelle structure est pour une aile (12) de l'aéronef à énergie solaire.

3. Structure selon la revendication 1 ou 2, dans laquelle les une ou plusieurs fenêtres optiquement transparentes comprennent un matériau à base de polymère.

4. Structure selon l'une quelconque des revendications précédentes, dans laquelle les une ou plusieurs fenêtres optiquement transparentes s'étendent sur 30 % à 65 % de la superficie de la peau.

5. Structure selon l'une quelconque des revendications précédentes, dans laquelle au moins l'un des un ou plusieurs panneaux solaires est fixé à l'intérieur d'au moins l'une des une ou plusieurs fenêtres optiquement transparentes.

6. Structure selon l'une quelconque des revendications précédentes, dans laquelle les un ou plusieurs panneaux solaires sont flexibles.

7. Structure selon l'une quelconque des revendications précédentes, comprenant en outre un actionneur (86) pour ajuster une orientation d'au moins l'un des un ou plusieurs panneaux solaires.

8. Structure selon la revendication 7, dans laquelle les un ou plusieurs panneaux solaires sont rigides.

9. Aéronef sans pilote (100) comprenant :
un fuselage (10) ;
des ailes (12) connectées au fuselage et pour fournir de la portance à l'aéronef ;
un ou plusieurs propulseurs alimentés électriquement (14) pour fournir de la poussée à l'aéronef ; et
une ou plusieurs batteries (24) pour stocker l'énergie électrique générée par un ou plusieurs panneaux solaires (31),
dans lequel au moins l'une des ailes comprend une structure selon l'une quelconque des revendications 1 à 8, et
dans lequel les un ou plusieurs panneaux solaires (31) sont destinés à générer de l'électricité pour entraîner le ou les propulseurs alimentés électriquement.

10. Aéronef selon la revendication 9, comprenant en outre une charge utile (16) pour effectuer une observation de la Terre quand l'aéronef est en vol.

11. Aéronef selon la revendication 10, dans lequel la charge utile comprend un radar à synthèse d'ouverture (RSO) pour effectuer une imagerie RSO de la surface de la Terre quand l'aéronef est en vol.

12. Aéronef selon l'une quelconque des revendications 9 à 11, lequel aéronef est configuré pour fonctionner à une altitude comprise entre 50 000 et 80 000 pieds.

13. Méthode de fabrication d'une aile (12) pour un aéronef à énergie solaire (100), comprenant :
la jonction d'un matériau thermorétractable à une ou plusieurs fenêtres optiquement transparentes (30) pour former une peau (13), dans laquelle les une ou plusieurs fenêtres optiquement transparentes sont positionnées dans un ou plusieurs trous formés dans le matériau thermorétractable ;
l'attachement de la peau à des supports rigides (15) ayant la forme d'une voilure ; et
le durcissement du matériau thermorétractable pour tendre la peau au-dessus des supports rigides.
